Europäisches Patentamt

European Patent Office

Office européen des brevets

(19)

(11) Publication number: **0 204 408 B1**

(12) **EUROPEAN PATENT SPECIFICATION**

(45) Date of publication of patent specification: **18.09.91**  (51) Int. Cl.5: **C09G 1/02**

(21) Application number: **86302874.2**

(22) Date of filing: **17.04.86**

(54) **Polishing composition.**

(30) Priority: **04.06.85 JP 121200/85**

(43) Date of publication of application:
**10.12.86 Bulletin 86/50**

(45) Publication of the grant of the patent:
**18.09.91 Bulletin 91/38**

(84) Designated Contracting States:
**BE DE FR GB NL SE**

(56) References cited:
**GB-A- 2 011 460**
**US-A- 3 972 786**
**US-A- 4 383 857**
**US-A- 4 475 981**

(73) Proprietor: **FUJIMI KENMAZAI KOGYO KABUSHIKI KAISHA**
**1-1, Chiryo 2-chome Nishibiwajima-cho Nishikasugai-gun Aichi-Ken 452(JP)**

(72) Inventor: **Kitano, Hirohito**
**1-12, Fukagawa-Cho Nakamura-Ku Nagoya-Shi Aichi-Ken, 453(JP)**
Inventor: **Oowaki, Toshiki**
**81, Aza Higashitashiro, Ooaza Wadakatsusa Kounan-Shi, Aichi-Ken 483(JP)**
Inventor: **Baba, Takashi**
**Seifuu-ryo, 1-1, Chiryo 2-chome, Nishibiwajima-cho Nishikasugai-gun, Aichi-ken, 452(JP)**

(74) Representative: **Taylor, Phillip Kenneth et al**
**W.P. THOMPSON & CO. Coopers Building Church Street Liverpool L1 3AB(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to polishing compositions, particularly compositions for polishing plastic products or non-electrolysis nickel plating layers.

A polishing composition for plastic products such as a plastic lens known in the art is a slurry formulated by suspending a polishing agent of aluminium oxide in water and adding aluminium nitride as a polishing accelerator, as disclosed in JP-B-53-3518.

This slurry can be used to polish plastic products with high efficiency to give high quality results. However, this slurry is strongly acidic and has a pH value of from about 4 to 2. On account of its strongly acidic nature, its use is liable to give rise to rust on the polishing machine or on tools used in contact with it, and the hands of an operator using the slurry may be roughened. Accordingly, the slurry is prone to harm machines or operators.

In recent years, a memory hard disc for computers or word processors has been made by a process in which a layer of non-electrolysis nickel plating (also called chemical plating) or a layer of alumite is formed on a substrate of aluminium to form a pre-treated surface, which pre-treated surface is polished, and a layer of storage magnetic medium then formed on the smoothed pre-treated surface. A general-purpose polishing slurry formulated by suspending aluminium oxide as a polishing agent in water is used for polishing the pre-treated surface.

However, such a general-purpose polishing slurry enables only a low degree of efficiency to be achieved when used to polish a layer of non-electrolysis nickel plating or the like and therefore is not practicable. Consequently, there is a need for an improved polishing composition for polishing a layer of non-electrolysis nickel plating or the like.

In view of above-mentioned state of the prior art, an object of the invention is to provide a polishing composition which enables polishing of a plastic product, a layer of non-electrolysis nickel plating or the like to be achieved with a high degree of efficiency and which results in high quality, and is also not prone to harm operators or machines.

The inventors have discovered that when nickel sulfate is added to a slurry formulated by suspending an aluminium oxide polishing agent in water, the slurry is neutral or only weakly acidic and can be used to polish a plastic product, a layer of non-electrolysis nickel plating or the like at a high degree of efficiency and results in a polished surface of high quality.

The present invention provides a polishing composition which comprises water, an aluminium oxide as polishing agent and as a polishing accelerator nickel sulfate, which is neutral or only weakly acidic.

The polishing composition of the invention, as will clearly be seen from the results of comparative tests hereinafter set forth, enables a plastic product to be polished at high efficiency to provide a high quality result. Moreover, because the polishing composition of the present invention is neutral or only weakly acidic, it is not liable to give rise to rust on the polishing machine or tools used therewith, nor to adversely affect the hands of an operator using the composition. Accordingly, the polishing composition is favourable for both operators and for machines.

Also the polishing composition of the present invention, as can clearly be seen from the results of the comparative tests hereinafter set forth, enables a layer of non-electrolysis nickel plating or the like to be polished at higher efficiency to produce a product of higher quality than compositions of the prior art.

A polishing composition embodying the invention is composed of a slurry formulated by suspending $\alpha$-aluminium oxide ($\alpha$-Al$_2$O$_3$) as polishing agent in pure water or deionized water and adding nickel sulfate (e.g. the alpha hexahydrate NiSO$_4$ $\cdot$ 6H$_2$O) thereto as a polishing accelerator, and is neutral or weakly acidic.

The polishing accelerator may be present in solution in the slurry in an amount of from 1 to 20% by weight, and the slurry may have a pH value of from 7 to 5.

The polishing agent may be present in the slurry in an amount of from 2 to 30% by weight, and may have a mean particle size of from 0.7 to 4.0 $\mu$m and a maximum particle size of 20 $\mu$m or less.

The $\alpha$-aluminium oxide polishing agent may be prepared by calcining granular boehmite (Al$_2$O$_3$ $\cdot$ H$_2$O, AlO(OH)) at a temperature of 1,100 to 1,200$^\circ$C for 2 to 3 hours, crushing relatively large particles into finer particles and separating particles falling within a predetermined particle size distribution.

In order to polish a plastic product or a layer of non-electrolysis nickel plating or the like using a polishing composition of the present invention, the polishing composition is disposed in the clearance between the surface of the plastic product or the layer of non-electrolysis nickel plating or the like and the surface of a polishing pad which is slidable on the surface of the product or the layer in similar manner to the prior art.

The following series of comparative tests illustrate the advantages of the invention.

2

(1) Tests for polishing plastic products

A group of polishing compositions embodying the invention were prepared in the form of slurries each formulated by suspending a polishing agent of $\alpha$-aluminium oxide ($\alpha$-$Al_2O_3$) in deionized water and adding thereto a polishing accelerator of nickel sulfate ($NiSO_4 \cdot 6H_2O$) at 1.0, 5.0, 10.0 and 20.0% by weight, respectively. The slurries had the pH values shown in Table 1.

Polishing compositions similar to those of the prior art were prepared in the form of slurries each formulated by suspending a polishing agent of $\alpha$-aluminium oxide ($\alpha$-$Al_2O_3$) in deionized water and adding thereto a polishing accelerator of aluminium nitride ($Al(NO_3)_3 \cdot 9H_2O$) at 1.0, 5.0, 10.0 and 20.0% by weight respectively. The slurries had the pH values shown in Table 1.

Both the polishing slurries made up according to the present invention and those of prior art contained 20% by weight of the polishing agent, and had a mean particle size of 1.3 $\mu$m and a maximum particle size of 20 $\mu$m or less.

The polishing agent of $\alpha$-Aluminium oxide was prepared by calcining granular boehmite ($Al_2O_3 \cdot H_2O$, AlO(OH)) at a temperature of 1,150 $^\circ$C for 3 hours, crushing relatively large particles into finer particles and separating particles falling within a predetermined particle size distribution.

A lens for glasses made of allyldiglycol carbonate resin having a diameter of 65 mm was used as a plastic product to be polished.

The lens was installed in an aspheric surface lens polisher, with a velveteen polishing pad or napped polishing pad abutting on the lens surface. The polishing was accomplished by sliding the lens and the polishing pad relative to one another for 10 minutes. During polishing, the polishing composition, whether the slurry of the invention or the prior art, was supplied between the lens and the polishing pad at rate of 2$\ell$/min. The polishing pressure was 270 g/cm$^2$.

After polishing, the polished lens surface was examined for the presence of such defects as orange peels and scratches. Then, the lens was weighed and weight loss due to the polishing was calculated so as to obtain the removal rate.

The test results are shown in Table 1 below.

## Table 1

### pH Value of Polishing Slurries and Polishing Results.

| Polishing Accelerator by weight % | Invention | | | Prior Art | | |
|---|---|---|---|---|---|---|
| | pH Value (25°C) | Removal Rate (mg/ 10 min.) | Surface Defect | pH Value (25°C) | Removal Rate (mg/ 10 min.) | Surface Defect |
| 1.0 | 6.6 | 90 | none | 4.0 | 95 | none |
| 5.0 | 6.0 | 105 | " | 3.4 | 105 | " |
| 10.0 | 5.9 | 110 | " | 3.2 | 115 | " |
| 20.0 | 5.6 | 110 | " | 2.5 | 101 | " |

As seen from Table 1 above, the polishing slurry of the invention has pH value of 6.6 to 5.6, and is neutral or weak acid. On the contrary, the polishing slurry of the prior art has pH value of 4.0 to 2.5, and is strong acid. When the polishing slurry of the invention is used, similarly to the prior art, the removal rate is large and the polishing efficiency is high, and no surface defect is found and therefore the polished surface has high quality.

(2) Tests for polishing layers of non-electrolysis nickel plating or the like for a memory hard disc

(a) Non-electrolysis nickel $\cdot$ phosphorus plating

In a polishing composition of the invention, the same slurry as in the case of the polishing tests of the plastic products is used.

In a polishing composition of the prior art, a slurry of the polishing composition of the invention without adding the polishing accelerator is used.

A memory hard disc was prepared by forming layers of non-electrolysis is nickel • phosphorus (Ni-P) plating each having thickness of 30 μm on both surfaces of a circular ring-shaped substrate of aluminium having an outer diameter of 130 mm. The plated layer had the chemical composition: nickel 90 to 92% and phosphorus 8 to 10%.

The disc was installed in a double sided polishing machine, with suede polishing pads abutting on the plated layers of both surfaces of the disc. Polishing was accomplished by sliding the disc and each polishing pad relative to one another, for 10 minutes. During polishing, the polishing composition, whether the slurry of the invention or that of the prior art, was supplied between the lens and each polishing pad at the rate of 0.1 ℓ/min. The polishing pressure was 50g/cm².

After polishing, the polished surfaces of the plated layers on both surfaces of the disc were examined for pressure of surface defects. Then, thickness of the disc was measured and the thickness decrease at both surfaces due to the polishing was calculated so as to obtain the removal rate.

The test results are shown in Table 2 below.

## Table 2
### Polishing Accelerators and Polishing Results.

| | Polishing Accelerator by weight % | pH Value (25°C) | Removal Rate μm/10min. | Surface Defect |
|---|---|---|---|---|
| **Prior Art** | 0 | 7.0 | 3.1 | orange peels |
| **Invention** | 1.0 | 6.6 | 5.9 | none |
| | 5.0 | 6.0 | 6.3 | " |
| | 10.0 | 5.9 | 7.0 | " |
| | 20.0 | 5.6 | 6.1 | " |

As seen from Table 2 above, the polishing slurry of the invention provides a higher removal rate, i.e., a better polishing efficiency than that of the prior art, and no surface defect is found and therefore the polished surface has high quality.

(b) Non-electrolysis nickel • boron plating

A memory hard disc was prepared by forming layers of non-electrolysis nickel boron (Ni-B) plating each having thickness of 30μm on both surfaces of a circular ring-shaped substrate of aluminium having an outer diameter of 130 mm. The plated layers had the chemical compositions nickel 99.0 to 99.5% and boron 0.5 to 1.0%.

The disc was polished in similar manner to that effected in test (a).

The test results are shown in Table 3 below.

4

## Table 3
### Polishing Accelerators and Polishing Results

| | Polishing Accelerator by weight % | pH Value (25°C) | Removal Rate µm/10min. | Surface Defect |
|---|---|---|---|---|
| Prior Art | 0 | 7.0 | 2.1 | orange peels |
| Invention | 10.0 | 5.9 | 5.5 | none |

As seen from Table 3 above, the polishing slurry of the invention provides a higher removal rate, i.e., a better polishing efficiency than that of the prior art, and no surface defect is found and therefore the polished surface has high quality.

(c) Alumite

A memory hard disc was prepared as in tests (a) and (b) by forming layers of alumite in place of the layers of non-electrolysis nickel plating.
The disc was polished in similar manner to that in test (a). The test results are shown in Table 4 below.

## Table 4
### Polishing Accelerators and Polishing Results

| | Polishing Accelerator by weight % | pH Value (25°C) | Removal Rate µm/10min. | Surface Defect |
|---|---|---|---|---|
| Prior Art | 0 | 7.0 | 1.0 | orange peels |
| Invention | 10.0 | 5.9 | 8.0 | none |

As seen from Table 4 above, the polishing slurry of the invention provides a better polishing efficiency and higher polishing quality than that of the prior art.

(d) Aluminium

A memory hard disc in which the substrate is aluminium itself without any layers of non-electrolysis nickel or alumite layers plated thereon was polished in similar manner to above-mentioned cases (a) to (c) and the test results are shown in Table 5 below.

5

## Table 5
## Polishing Accelerators and Polishing Results

| | Polishing Accelerator by weight % | pH Value (25°C) | Removal Rate $\mu$m/10min. | Surface Defect |
|---|---|---|---|---|
| Prior Art | 0 | 7.0 | 1.5 | orange peels |
| Invention | 10.0 | 5.9 | 8.5 | none |

As seen from Table 5 above, the polishing slurry of the invention is excellent in comparison to that of the prior art.

**Claims**

1. A polishing composition comprising water and a polishing agent of aluminium oxide, characterised in that the polishing composition also contains nickel sulphate as a polishing accelerator and is neutral or weakly acidic.

2. A polishing composition as set forth in claim 1, characterised in that the polishing accelerator is present in an amount of from 1 to 20% by weight and the polishing composition has a pH value of from 7 to 5.

3. A polishing composition as set forth in claim 1 or 2, characterised in that the polishing agent is present in an amount of from 2 to 30% by weight.

4. A polishing composition as set forth in any of claims 1 to 3, characterised in that the polishing agent has a mean particle size of from 0.7 to 4 $\mu$m and a maximum particle size of 20 $\mu$m or less.

5. A polishing composition as set forth in any of claims 1 to 4, characterised in that the polishing agent is $\alpha$-aluminium oxide prepared by calcining granular boehmite at a temperature of 1,100 to 1,200° C for 2 to 3 hours, crushing relatively larger particles into finer particles and separating particles falling within a predetermined particle size distribution.

**Revendications**

1. Composition de polissage comprenant de l'eau et un agent de polissage constitué d'oxyde d'aluminium, caractérisée en ce que la composition de polissage contient également du sulfate de nickel en tant qu'accélérateur de polissage et est neutre ou faiblement acide.

2. Composition de polissage selon la revendication 1, caractérisée en ce que l'accélérateur de polissage est présent en une quantité de 1 à 20 % en poids et la composition de polissage a un pH de 7 à 5.

3. Composition de polissage selon la revendication 1 ou 2, caractérisée en ce que l'agent de polissage est présent en une quantité de 2 à 30 % en poids.

4. Composition de polissage selon l'une quelconque des revendications 1 à 3, caractérisée en ce que l'agent de polissage a une taille moyenne de particules de 0,7 à 4 $\mu$m et une taille maximale de particules de 20 $\mu$m ou moins.

5. Composition de polissage selon l'une quelconque des revendications 1 à 4, caractérisée en ce que l'agent de polissage consiste en oxyde d'aluminium $\alpha$ préparé par calcination de boehmite granulaire à une température de 1 100 à 1 200 °C pendant 2 à 3 heures, broyage des particules de relativement grandes tailles en particules plus fines et séparation des particules rentrant dans une distribution préétablie de tailles de particules.

**Patentansprüche**

1.  Polierzusammensetzung mit Wasser und einem Poliermittel aus Aluminiumoxid, dadurch gekennzeichnet, daß die Polierzusammensetzung auch Nickelsulfat als Polierbeschleuniger enthält und neutral oder schwach säurehaltig ist.

2.  Polierzusammensetzung nach Anspruch 1, dadurch gekennzeichnet, daß der Polierbeschleuniger in einer Menge von 1 bis 20 Gewichtsprozent vorliegt und die Polierzusammensetzung einen PH-Wert von 7-5 aufweist.

3.  Polierzusammensetzung nach Anspruch 1 oder 2, dadurch gekennzeichnet, daß das Poliermittel in einer Menge von 2-30 Gewichtsprozent vorliegt.

4.  Polierzusammensetzung nach einem der Ansprüche 1 bis 3, dadurch gekennzeichnet, daß das Poliermittel eine mittlere Partikelgröße von 0,7 bis 4 $\mu$m und eine maximale Partikelgröße von 20 $\mu$m oder weniger aufweist.

5.  Polierzusammensetzung nach einem der Ansprüche 1 bis 4, dadurch gekennzeichnet, daß das Poliermittel ein $\alpha$-Aluminiumoxid ist, welches durch Kalzinieren von körnigem Boehmit bei einer Temperatur von 1.100 bis 1.200 ° Celsius über 2-3 Stunden, Zerbrechen relativ großer Partikel in feinere Partikel und Trennung von Partikeln, welche in eine vorbestimmte Partikelgrößenverteilung fallen, hergestellt wird.